# EUROPÄISCHE PATENTSCHRIFT

(11) **EP 1 038 605 B1**
(45) Veröffentlichungstag und Bekanntmachung des Hinweises auf die Patenterteilung: **26.04.2006**
(21) Anmeldenummer: 00105787.6
(22) Anmeldetag: 18.03.2000
(51) Int. Cl.: B21D 31/04, B26F 1/18

(54) **Obermesser für eine Vorrichtung zur Herstellung eines Streckmetallgitters sowie Verfahren zur Herstellung eines solchen Streckmetallgitters**
Upper cutting bar for an apparatus for manufacturing an expanded mesh sheet and method for manufacturing such an expanded mesh sheet
Lame de coupe supérieure pour une installation de fabrication d'un treillis à métal déployé et procédé de fabrication d'un tel treillis à métal déployé

(30) Priorität: 23.03.1999 DE 19913028
(43) Veröffentlichungstag der Anmeldung: 27.09.2000
(73) Patentinhaber: Brünsch, Joachim, 57078 Siegen (DE)
(72) Erfinder: Brünsch, Joachim, 57078 Siegen (DE)
(74) Vertreter: Beckmann, Jürgen

(56) Entgegenhaltungen:
- WO-A-00/53356
- DE-B- 1 082 568
- US-A- 3 840 952

## Beschreibung

Die Erfindung bezieht sich auf ein mit stumpfwinklig zackenförmigen Schneidzähnen ausgestattetes Obermesser für eine Vorrichtung zur Herstellung eines Streckmetallgitters, bei dem einige Knotenpunkte zwischen den Stegen des Streckmetallgitters durchgetrennt sind.

Die Druckschrift DE 36 42 063 C2 beschreibt ein plastisch verformbares Abdeckmaterial mit einer plastisch modulierbaren Metalleinlage innerhalb wenigstens einer Elastomerschicht. Ein solches Abdeckmaterial wird in erster Linie zu Abdeckungs- und Dichtungszwecken im Bauwesen verwendet, insbesondere dort, wo eine wasserdichte Abdichtung an einer unregelmäßig geformten Unterlage angestrebt wird. Als Metalleinlage wird die Verwendung eines Streckmetallgitters vorgeschlagen, das sowohl in Längsrichtung als auch in Querrichtung eine bestimmte Dehnbarkeit aufweist, so daß es dreidimensionalen Formen plastisch angepaßt werden kann. Bei dem hier verwendeten Streckmetallgitter handelt es sich um rautenförmige Maschen, die über geschlossene Knotenpunkte untereinander verbunden sind, so daß sich praktisch eine Dehnbarkeit im wesentlichen nur in einer Richtung (Längsrichtung) ergibt.

Nach WO 96/18468 wird u.a. vorgeschlagen, zur Erhöhung der dreidimensionalen Verformbarkeit des Streckmetallgitters (Gittermatte) einzelne Knotenpunkte, d.h. einige der die Maschen untereinander verbindenden Gitterknoten durchzutrennen.

Aus der nachveröffentlichten WO-A-0 053 356, deren Figuren 2 und 4 bis 8 einen Stand der Technik gemäß Art. 54(3) EPÜ bilden, ist ein Streckmetallgitter bekannt, bei dem einzelne Gitterknoten als Sollbruchstellen ausgebildet sind. Zur Herstellung eines solchen Gitters wird ein Obermesser mit zackenförmigen Schneidzähnen beschrieben, bei dem (a) alle Zahnspitzen durchgehend gleich sind, (b) nur jeder zweite Zahngrund so breit ist wie die Zahnspitzen, und (c) alle übrigen Zahngründe weniger tief ausgebildet und schmaler sind. Ein solches Obermesser wurde vom Gegenstand des Anspruchs 1 ausgeschlossen.

Der Erfindung liegt die Aufgabe zugrunde, die Herstellung eines solchen Streckmetallgitters rationell zu gestalten.

Diese Aufgabe wird erfindungsgemäß durch ein Obermesser mit den Merkmalen des Patentanspruchs 1 gelöst. Ein Verfahren zur Herstellung eines Streckmetallgitters mit einem solchen Obermesser ist im Anspruch 4 definiert.

Zweckmäßige Weiterbildungen der Erfindung sind den Unteransprüchen zu entnehmen.

Durch die erfindungsgemäße Ausgestaltung des Obermessers für eine Vorrichtung zur Herstellung eines Streckmetallgitters ist es ohne gesonderten Arbeitsgang möglich, beim Schneiden der Maschen des Streckmetallgitters gleichzeitig z.B. jede zweite Reihe von Knotenpunkten durchzuschneiden oder soweit durchzuschneiden, daß nur noch eine dünne fadenförmige Verbindung des Metalls am jeweiligen Knotenpunkt bestehen bleibt, die bei plastischer Verformung des Streckmetallgitters abreißt. Es ist auch möglich, mehrere Reihen von nebeneinander liegenden Knotenpunkten durch- oder anzuschneiden und mehrere benachbarte Reihen von Knotenpunkten geschlossen zu lassen. Als Produkt ergibt sich in jedem Fall ein Streckmetallgitter, das eine gute Anformbarkeit an beliebig geformte Unterlagen bietet, auch wenn es als Einlage an oder zwischen Elastomerschichten verwendet wird. Ein solches Produkt kann, wie bereits in WO 96/18468 erwähnt, nicht nur als Einlage in hochgradig anformbaren Dichtbahnen, wie in DE 36 42 063 C2 beschrieben, sondern auch bei der Formgebung von Fahrzeug-Karosserieteilen, bei Stukkatur- und Gewölbe-Bewehrungen, Sitzschalen, Bildhauerei- und Architekturprojekten, Verpackungen etc. verwendet werden.

Ein Ausführungsbeispiel eines erfindungsgemäßen Obermessers ist in der Zeichnung dargestellt. Dabei zeigt
- Fig. 1: eine Seitenansicht des Obermessers,
- Fig. 2: einen vergrößerten Ausschnitt II aus Fig. 1 und
- Fig. 3: ein Stück Streckmetallgitter teils im ursprünglichen und teils im ausgedehnten Zustand.

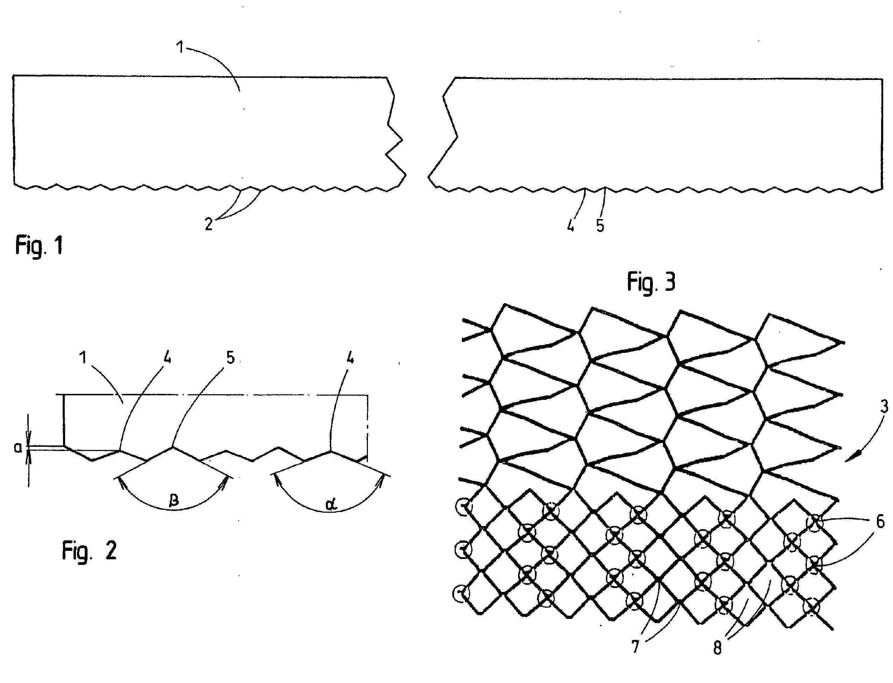

Das in den Fig. 1 und 2 dargestellte Obermesser 1 für eine Vorrichtung zur Herstellung eines Streckmetallgitters, wie es beispielsweise in Fig. 3 dargestellt ist, weist stumpfwinklig zackenförmige Schneidzähne 2 auf, die mit einem mit gerader Schneidkante versehenen Untermesser (nicht dargestellt) einer Vorrichtung zum Schneiden des Streckmetallgitters 3 (Fig. 3) zusammenwirken.

Wie deutlicher aus dem vergrößerten Ausschnitt nach Fig. 2 hervorgeht, liegt der Scheitelpunkt 4 des größeren Winkels α zwischen einigen Schneidzähnen 2 (hier jeder zweite Scheitelpunkt 4) in Schneidbewegungsrichtung des Obermessers 1 um das Maß a tiefer als der Scheitelpunkt 5 der übrigen, kleineren Winkel β zwischen den anderen Schneidzähnen 2, so daß Knotenpunkte 6, die in Fig. 3 lediglich der Identifizierung wegen mit jeweils einem Kreis versehen sind, durchtrennt werden oder soweit angeschnitten werden, daß nur eine dünne fadenförmige Verbindung übrigbleibt, die bei Verformung, wie im oberen Teil der Fig. 3 dargestellt, abreißt. Die nicht durch- oder angeschnittenen Knotenpunkte 7 bleiben dabei erhalten und gewährleisten dabei die Integrität des Streckmetallgitters 3. In Fig. 3 sind die Maschen 8 des Streckmetallgitters 3 quadratisch dargestellt. In der Regel sind diese Maschen 8 rautenförmig ausgebildet, wie beispielsweise in den Fig. 5 und 6 von DE 36 42 063 C2 dargestellt. Als Werkstoff für das Streckmetallgitter 3 kann jedes geeignete Metall oder auch Kunststoffmaterial verwendet werden, das plastisch verformbar ist und eine möglichst geringe Rückfederungseigenschaft hat.

## Patentansprüche

1. Mit stumpfwinklig zackenförmigen Schneidzähnen (2) ausgestattetes Obermesser für eine Vorrichtung zur Herstellung eines Streckmetallgitters (3), bei dem einige Knotenpunkte (6) zwischen den Stegen des Streckmetallgitters durchgetrennt sind,
wobei zwischen mindestens zwei Schneidzähnen (2) ein größerer Winkel (α) ausgebildet ist als zwischen den anderen Schneidzähnen, wobei der Scheitelpunkt (4) dieses größeren Winkels (α) in Schneidbewegungsrichtung tiefer liegt als der Scheitelpunkt (5) der übrigen, kleineren Winkel (β).
ausgenommen ein Obermesser mit allen folgenden Merkmalen:
- alle Zahnspitzen sind durchgehend gleich;
- nur jeder zweite Zahngrund ist so breit wie die Zahnspitzen;
- alle übrigen Zahngründe sind weniger tief ausgebildet und schmaler.

2. Obermesser nach Anspruch 1, **dadurch gekennzeichnet, daß** jeder zweite Winkel (α) zwischen den Schneidzähnen (2) größer ist als die übrigen Winkel (β).

3. Obermesser nach Anspruch 1, **dadurch gekennzeichnet, daß** mehrere nebeneinander liegende Winkel (α) zwischen den Schneidzähnen (2) größer sind als die Winkel (β) zwischen mehreren benachbarten Schneidzähnen (2).

4. Verfahren zur Herstellung eines Streckmetallgitters (3) mit einem Obermesser (1) nach mindestens einem der Ansprüche 1 bis 3, in welchem das Obermesser (1) beim Schneiden des Streckmetallgitters (3) einen solchen Hub ausführt, daß die Scheitelpunkte (4) der größeren Winkel (α) die betreffenden Knotenpunkte (6) des Streckmetallgitters (3) nicht ganz, sondern bis auf eine dünne fadenartige Verbindung durchschneidet, die bei räumlicher Verformung des Streckmetallgitters (3) reißt.

## Claims

1. Top blade with obtuse-angled, serrated cutting teeth (2) for a device for producing an expanded metal mesh (3), in which some of the node points (6) between the webs of the expanded metal mesh are severed,
in which an angle (α) between at least two cutting teeth (2) is bigger than it is between the other cutting teeth and the apex (4) of this bigger angle (α) is deeper in the direction of the cutting movement than the apex (5) of the other smaller angles (β),
except for a top blade incorporating all of the following features:
- all tooth tips are identical end to end;
- only every second tooth base is as wide as the tooth tips;
- all other tooth bases are less deep and narrower.

2. Top blade as claimed in claim 1, **characterised in that** every second angle (α) between the cutting teeth (2) is bigger than the other angles (β).

3. Top blade as claimed in claim 1, **characterised in that** several adjacently lying angles (α) between the cutting teeth (2) are bigger than the angles (β) between several adjacent cutting teeth (2).

4. Method of producing an expanded metal mesh (3) with a top blade (1) as claimed in at least one of claims 1 to 3, whereby, when cutting the expanded metal mesh (3), the top blade (1) effects a stroke in such a way that the apex points (4) of the bigger angles (α) do not completely sever the relevant node points (6) of the expanded metal mesh (3) but sever them with the exception of a thin, thread-like connection which tears when the expanded metal mesh (3) is three-dimensionally deformed.

## Revendications

1. Lame supérieure dotée de dents coupantes (2) formant des zigzags à angle obtus, destinée à un dispositif pour fabriquer un treillis en métal déployé (3), dont quelques noeuds (6) entre les mailles du treillis en métal déployé sont coupés, sachant qu'entre au moins deux dents coupantes (2) est réalisé un angle (α) qui est plus grand que celui entre les autres dents coupantes, le sommet (4) de cet angle plus grand (α) étant situé plus bas que le sommet (5) des autres angles plus petits (β) par rapport au sens du mouvement de coupe, à l'exception d'une lame supérieure présentant toutes les caractéristiques suivantes :
- toutes les pointes des dents sont identiques de bout en bout ;
- seul un intervalle de dents sur deux est aussi large que les pointes des dents ;
- tous les intervalles restants sont réalisés moins profonds et plus étroits.

2. Lame supérieure selon la revendication 1, **caractérisée en ce qu'**un angle (α) sur deux entre les dents coupantes (2) est plus grand que les autres angles (β).

3. Lame supérieure selon la revendication 1, **caractérisée en ce que** plusieurs angles (α) situés côte à côte entre les dents coupantes (2) sont plus grands que les angles (β) entre plusieurs dents coupantes (2) juxtaposées.

4. Procédé pour fabriquer un treillis en métal déployé (3) à l'aide d'une lame supérieure (1) selon au moins l'une des revendications 1 à 3, selon lequel la lame supérieure (1) effectue, lors de la coupe du treillis en métal déployé (3), une course telle que les sommets (4) des plus grands angles (α) tranchent les noeuds correspondants (6) du treillis en métal déployé (3) non pas complètement, mais laissent un lien ténu semblable à un fil qui se rompt lorsque l'on déforme le treillis en métal déployé (3) en trois dimensions.
